# EUROPÄISCHE PATENTANMELDUNG

(11) **EP 4 124 665 A1**
(43) Veröffentlichungstag der Anmeldung: **01.02.2023**
(21) Anmeldenummer: 22187962.0
(22) Anmeldetag: 29.07.2022
(51) Int. Cl.: C21C 5/56, F27D 13/00

(54) **SCHROTTTROCKNUNGS- UND/ODER SCHROTTVORWÄRMVORRICHTUNG**

(30) Priorität: 30.07.2021 US 202163227425 P; 26.07.2022 US 202217814916
(71) Anmelder: SMS Group GmbH, 40237 Düsseldorf (DE)
(72) Erfinder: Krausa, Steffen, Pittsburgh, PA 15223 (US); Zeisler, William Todd, Mars, 16046 (US); Debski, Paul, Wilkinsburg, 15221 (US); Odenthal, Hans-Jürgen, 40822 Mettmann (DE); Starke, Peter, 47228 Duisburg (DE); Richard Cook, Richard, Pittsburgh, PA 15202 (US); Kaltenbach, Michael J., Newcastle, 16101 (US)
(74) Vertreter: Klüppel, Walter

(57) **Zusammenfassung**

Die vorliegende Anmeldung betrifft Vorrichtung (1) zum Trocknen und/oder Vorwärmen von metallischen und/oder nichtmetallischen Materialien, vorzugsweise Schrotten, umfassend ein Aufnahmebehältnis (3) sowie einen in dem Aufnahmebehältnis (3) angeordneten Schrottkorb (7), der einen gasdurchlässigen Bodenbereich (9) aufweist, wobei das Aufnahmebehältnis (3) in seiner Wandung (4) zumindest eine Prozessgaseingangsleitung (6) umfasst, über die ein Prozessgas mit einer Temperatur im Bereich von 200 bis 1600 °C in das Aufnahmebehältnis (3) einbringbar ist, sowie zumindest eine innerhalb der zumindest einen Prozessgaseingangsleitung (6) koaxial angeordnete Injektordüse (19), über die ein Kühlgas in das Prozessgas einbringbar ist.

## Beschreibung

Die vorliegende Erfindung betrifft eine Vorrichtung zum Trocknen und/oder Vorwärmen von metallischen und/oder nichtmetallischen Materialien, vorzugsweise Schrotten; ein Verfahren zum Trocknen und/oder Vorwärmen von metallischen und/oder nichtmetallischen Materialien, vorzugsweise Schrotten, mittels eines Prozessgases, welches über eine Prozessgaseingangsleitung der erfindungsgemäßen Vorrichtung zugeführt wird; sowie eine metallurgische Anlage, vorzugsweise zur Herstellung von schmelzflüssigen metallischen Erzeugnissen.

Solche Vorrichtungen sind im Allgemeinen aus dem Stand der Technik bekannt und dienen zum einen der Energierückgewinnung, indem heiße Prozessabgase, die während eines Einschmelzprozesses entstehen, zum Vorwärmen einer einzuschmelzenden Schrottcharge genutzt werden. Des Weiteren dienen solche Vorrichtungen dazu, die einzuschmelzende Schrottcharge von Wasser, insbesondere von Schnee und/oder Eis, zu befreien, um das Risiko von Wasserdampfexplosionen während des Einschmelzprozesses zu minieren und somit den Betrieb sicherer zu gestalten.

Aus dem Stand der Technik sind verschiedene Ausführungen solcher Vorrichtungen bekannt.

So offenbart beispielsweise die deutsche Patentschrift DE 33 07 400 C1 einen Schrottvorwärmstand, der einen einseitig offenen Schrottkorb mit einem durchlässigen Boden umfasst. Der Schrottvorwärmstand umfasst eine vertikal bewegliche, stationär angeordnete, Haube, die über eine Prozessgasleitung an einer Nachverbrennungskammer angeschlossen ist und über die der in den Schrottvorwärmstand eingefahrene Schrottkorb verschließbar ist.

Weiterhin ist aus der deutschen Offenlegungsschrift DE 10 2018 216 652 A1 eine Schrotttrocknungs- und Schrottvorwärmvorrichtung bekannt, die einen Schrottkorb mit einem gasdurchlässig ausgebildeten Bodenbereich sowie eine Aufnahme für den Schrottkorb umfasst. Die Aufnahme weist eine Auflage zur Aufnahme des Bodenbereichs des Schrottkorbs auf und schließt einen Gaszuführraum für ein Prozessgas ein. Über eine Abdeckung können der Schrottkorb sowie die Aufnahme gegen die Umgebung abgedichtet werden.

Eine weitere Schrotttrocknungsvorrichtung ist aus der US 4,666,402 A bekannt, die einen in einer Vorwärmkammer angeordneten Schrottkorb aufweist. Der Schrottkorb wird hierbei mittels einer Haube abgedichtet, die eine Prozessgasleitung für heißes Prozessgas umfasst. Ferner weist die Haube eine Abdeckplatte auf, über die die Vorwärmkammer gegenüber der Umgebung abgedichtet werden kann. Die Abdeckplatte umfasst hierzu ein umfangsseitig angeordnetes und sich vertikal erstreckendes Ringelement, welches in eine Wassergrube eintaucht.

Weitere aus dem Stand der Technik bekannte Schrottkörbe, mit denen Schrotte mittels Prozessgasen vorgewärmt werden können, sind zudem aus den Druckschriften EP 0 970 255 B1, EP 0 636 698 B1, EP 0 359 808 B1 sowie DE 31 33 447 A1 bekannt.

Die heißen Prozessgase, die in der Regel eine Temperatur von 200 bis 1600 °C aufweisen, können üblicherweise nicht mittels konventioneller Fördereinrichtungen, wie mittels eines Gebläses, eines Verdichters oder eine Pumpe, gefördert werden, da die hohen Temperaturen die entsprechenden Einrichtungen bereits nach kurzer Zeit verschleißen. Zum anderen müssen die heißen Prozessgase in der Regel gekühlt werden, um ein Überschreiten der zulässigen Betriebstemperaturen, der in einer solchen Vorrichtung verbauten mechanischen und elektronisch Komponenten, zu vermeiden.

Vor diesem Hintergrund liegt der vorliegenden Erfindung die Aufgabe zu Grunde, eine gegenüber dem Stand der Technik verbesserte Vorrichtung zum Trocknen und/oder zum Vorwärmen von metallischen und/oder nichtmetallischen Materialien sowie ein gegenüber dem Stand der Technik verbessertes Verfahren zum Trocknen und/oder Vorwärmen von metallischen und/oder nichtmetallischen Materialien mittels eines Prozessgases bereitzustellen. In einem weiteren Aspekt ist Aufgabe der vorliegenden Erfindung eine gegenüber dem Stand der Technik verbesserte metallurgische Anlage, vorzugsweise zur Herstellung von schmelzflüssigen metallischen Erzeugnissen, bereitzustellen.

### Beschreibung der Erfindung

Gemäß einem ersten Aspekt wird die Aufgabe erfindungsgemäß durch eine Vorrichtung mit den Merkmalen des Patentanspruchs 1 gelöst.

Die erfindungsgemäße Vorrichtung umfasst ein Aufnahmebehältnis sowie einen in dem Aufnahmebehältnis angeordneten Schrottkorb, der einen gasdurchlässigen Bodenbereich aufweist, wobei das Aufnahmebehältnis in seiner Wandung zumindest eine Prozessgaseingangsleitung umfasst, über die ein Prozessgas mit einer Temperatur im Bereich von 200 bis 1600 °C, vorzugsweise mit einer Temperatur im Bereich von 400 bis 1200 °C, mehr bevorzugt mit einer Temperatur im Bereich von 600 bis 1200 °C in das Aufnahmebehältnis einbringbar ist. Erfindungsgemäß ist vorgesehen, dass innerhalb der zumindest einen Prozessgaseingangsleitung zumindest eine koaxial angeordnete Injektordüse angeordnet ist, über die ein Kühlgas in das Prozessgas einbringbar ist.

In gleicher Weise betrifft die vorliegende Erfindung zudem ein Verfahren zum Trocknen und/oder Vorwärmen von metallischen und/oder nichtmetallischen Materialien, vorzugsweise Schrotten, mittels eines Prozessgases, welches über eine Prozessgaseingangsleitung der erfindungsgemäßen Vorrichtung zugeführt wird. Erfindungsgemäß ist hierbei vorgesehen, dass dem Prozessgas über zumindest eine in der zumindest einen Prozessgaseingangsleitung koaxial angeordnete Injektordüse ein Kühlgas zugemischt wird, über welches die Temperatur des Prozessgases regulierbar ist.

Über die zumindest eine innerhalb der zumindest einen Prozessgaseingangsleitung gleichachsig angeordnete Injektordüse kann ein Kühlgas, vorzugsweise Luft oder ein inertes Gas, dem Prozessgas zugemischt werden, um die Temperatur des Prozessgases in einen Bereich von 150 bis 600 °C, vorzugsweise bis maximal 350 °C, zu reduzieren. Das Mischprinzip zwischen dem heißen Prozessgas und dem kalten Kühlgas besteht hierbei in der Ausnutzung des Geschwindigkeitsgradienten zwischen dem schnellen Kühlgasstrom und dem langsamen Prozessgasstrom. Hierbei wird davon ausgegangen, dass sich zwischen beiden Strömungsschichten eine instabile, freie Scherschicht ausbildet, die die Tendenz hat, sich aufzurollen und dadurch Wirbel zu bilden. Diese Wirbel sind in der Regel instationär, hochgradig turbulent und vergrößern sich auf ihrem Weg stromabwärts durch die Prozessgaseingangsleitung, wodurch das heiße Prozessgas zunehmend in den kalten Kühlgaskernstrahl eingemischt wird. Das sodann verdünnte und abgekühlte Prozessgas strömt über die Prozessgaseingangsleitung in das Aufnahmebehältnis, in dem es sodann den Schrottkorb durchströmt.

Die erfindungsgemäße Vorrichtung sowie das entsprechende erfindungsgemäße Verfahren ermöglicht somit eine zielgerichtete Anpassung der Betriebsparameter und verhindert ein Überschreiten der zulässigen Betriebstemperaturen der mechanischen und elektrischen Komponenten der Vorrichtung. Ggf. können zusätzlich Umgebungsbedingungen, wie Wetter- und/oder Niederschlagsdaten, die Luftfeuchtigkeit, die Temperatur und/oder Kombinationen hiervon berücksichtigt werden, um bei allen Bedingungen einen optimierten Trocknungs- und/oder Vorwärm-Prozess zu gewährleisten.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

In einer vorteilhaften Ausführungsvariante ist die zumindest eine Injektordüse über eine Kühlgasleitung mit einer Kühlgasfördereinrichtung, insbesondere einer Gebläseeinrichtung, fluidisch verbunden. Über diese wird das Kühlgas, beispielsweise Umgebungsluft, angesaugt und über die zumindest eine Injektordüse koaxial in das heiße Prozessgas eingeleitet. Die Kühlgasfördereinrichtung kann hierbei als Axial- oder Radialgebläseeinrichtung und/oder als Seitenkanalverdichter ausgebildet sein.

Die zumindest eine Injektordüse kann vorzugsweise als Unterschalldüse oder alternativ als Überschalldüse ausgebildet sein. In einer vorteilhaften Ausführungsvariante kann die Injektordüse aus einem metallischen Werkstoff oder auch aus einer temperaurbeständigen Feuerfestmasse, vorzugsweise mit einem dünnen Stahlpanzer, ausgeführt sein.

Grundsätzlich gilt, dass ein hoher Massenstrom und eine hohe Temperatur des verdünnten und abgekühlten Prozessgases für die Trocknung und/oder Vorwärmung effizienter sind. Das so verdünnte Prozessgas sollte allerdings eine Temperatur von 150 °C nicht unter sowie eine Temperatur von 600 °C nicht überschreiten. Daher ist die Austrittsöffnung der zumindest einen Injektordüse derart ausgebildet, dass ein hoher Volumenstrom des heißen Prozessgases mit hoher Temperatur in den kalten Kühlgasstrahl eingesaugt wird. Vorzugsweise wird dies durch ein spezifisches Durchmesserverhältnis der Austrittsöffnung der Injektordüse zu dem Innendurchmesser der Prozessgaseingangsleitung sowie über ein spezifisches Geschwindigkeitsverhältnis des Prozessgases zu dem Kühlgas erzielt.

In einer Weiterbildung kann die zumindest eine Prozessgaseingangsleitung zumindest einen Kühlabschnitt, wie beispielsweise einen wassergekühlten Kühlmantel, aufweisen, um die für den Trocknungs- und/oder Vorwärmprozess erforderliche Temperatur des Prozessgases noch genauer zu regulieren.

Der gasdurchlässige Bodenbereich des Schrottkorbs ist vorzugsweise gewölbt ausgebildet und umfasst umfangsseitig mehrere Schlitze, über die das Prozessgas in den Schrottkorb einbringbar ist. Die umfangsseitigen Schlitze können vorteilhafterweise durch eine Anordnung von übereinander geschichteten Blechen ausgebildet sein. Besonders vorteilhaft ist vorgesehen, dass die Bleche in Bezug auf eine Horizontale geneigt angeordnet sind, so dass zum einen das kondensierte Wasser besser abfließen kann und zum anderen kleiner Schrottfraktionen weniger verkanten.

Um das während des Trocknungs- und/oder Vorwärmprozesses kondensierte Wasser aus dem Schrottkorb zu entfernen, ist vorteilhafterweise vorgesehen, dass das Aufnahmebehältnis und/oder der Schrottkorb selbst ein ringförmiges Auflageelement aufweist, auf dem der Schrottkorb abstellbar ist. In diesem Zusammenhang ist besonders bevorzugt vorgesehen, dass das Aufnahmebehältnis eine unterhalb des Auflageelements angeordnete Wasserleitung umfasst, über die das sodann anfallende kondensierte Wasser ausführbar ist.

Die zumindest eine Prozessgaseingangsleitung ist vorzugsweise in einem unteren Bereich der Wandung angeordnet. Hierdurch wird erzielt, dass das heiße dem Aufnahmebehältnis zugeführte Prozessgas von unten durch den Schrottkorb geführt werden kann.

Zur effizienten Abdichtung des in dem Aufnahmebehältnis angeordneten Schrottkorbes ist vorzugsweise vorgesehen, dass der Schrottkorb an seiner äußeren Mantelfläche ein flanschartig ausgebildetes Element mit einem Dichtmittel aufweist, welches mit einem Dichtsitz des Aufnahmebehältnisses korrespondiert. Das Dichtmittel kann vorzugsweise ein sich vertikal von dem flanschartigen Element erstreckendes ringförmiges Blech sein, welches in den, vorzugsweise als ringförmigen Kanal ausgebildeten, mit Sand gefüllten Dichtsitz eintaucht.

Das während des Trocknungs- und/oder Vorwärmprozesses den Schrottkorb durchströmende Prozessgas kann über ein Deckelelement und/oder eine Haube abgesaugt werden, welches vorzugsweise eine Prozessgasausgangsleitung umfasst. In einer vorteilhaften Ausführungsvariante kann das Deckelelement und/oder die Haube mit dem Schrottkorb und/oder dem Aufnahmebehältnis auch verschließbar ausgeführt sein.

In einer weiteren mehr bevorzugten Ausführungsvariante kann das Deckelelement und/oder die Haube lediglich über das Aufnahmebehältnis und/oder über den Schrottkorb abgesenkt und derart positioniert werden, dass die Umgebungsluft mit eingesaugt wird. Da hierzu üblicherweise ebenfalls in der Prozessgasausgangsleitung angeordnete Gebläseeinrichtungen verwendet werden, wird hierdurch erzielt, dass diese weniger stark belastet werden.

Gemäß einem weiteren Aspekt kann die vorliegende Erfindung daher über eine oberhalb des Schrottkorbs absenkbar angeordnete Haube gekennzeichnet sein, über die das Prozessgas wieder ausführbar ist.

In einem weiteren Aspekt betrifft die vorliegende Erfindung zudem eine metallurgische Anlage, vorzugsweise zur Herstellung von schmelzflüssigen metallischen Erzeugnissen, insbesondere Stahl, umfassend ein Einschmelzaggregat, vorzugsweise ein elektrisch betriebenes Einschmelzaggregat, wie beispielsweise einen Elektrolichtbogenofen (EAF), eine mit dem Einschmelzaggregat über eine Prozessabgasleitung fluidisch verbundene Nachverbrennungskammer sowie die erfindungsgemäße Vorrichtung, die über die Prozessgaseingangsleitung mit der Nachverbrennungskammer fluidisch verbunden ist.

### Figurenbezeichnung

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
Fig. 1 eine Ausführungsvariante der erfindungsgemäßen Vorrichtung zum Trocknen und/oder Vorwärmen von metallischen Schrotten,

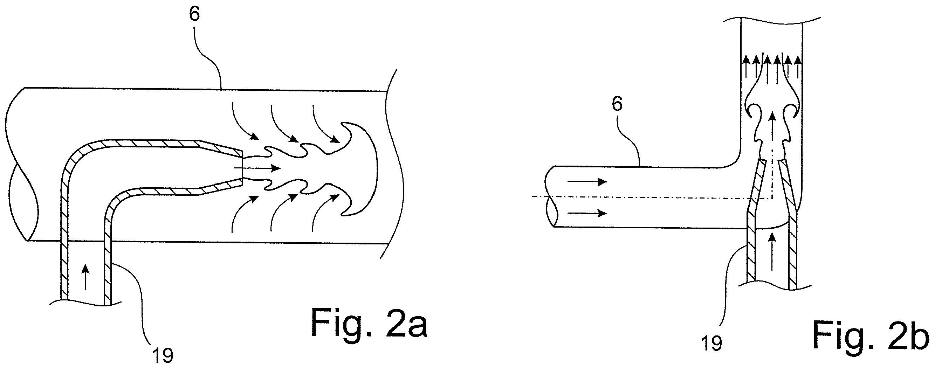

Fig. 2a/b zwei Ausführungsvarianten einer Anordnung der Injektordüse in der Prozessgaseingangsleitung, und
Fig. 3 einen Teil einer weiteren Ausführungsvariante der erfindungsgemäßen Vorrichtung in einer Schnittdarstellung, und
Fig. 4 eine Ausführungsvariante einer metallurgischen Anlage zur Herstellung von schmelzflüssigen metallischen Erzeugnissen enthaltend die in Figur 1 oder Figur 3 gezeigte Vorrichtung.

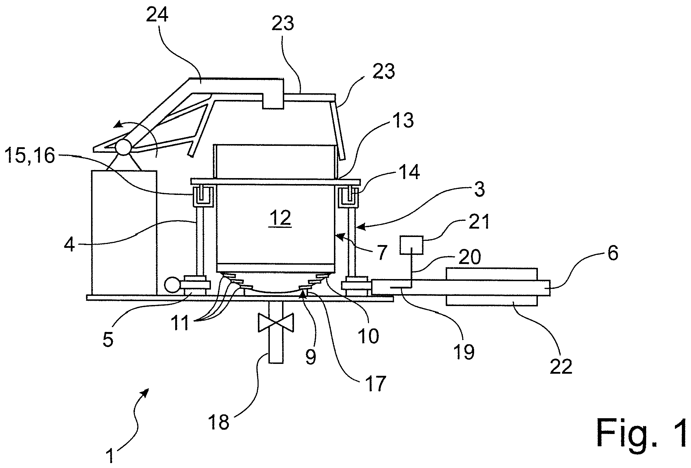

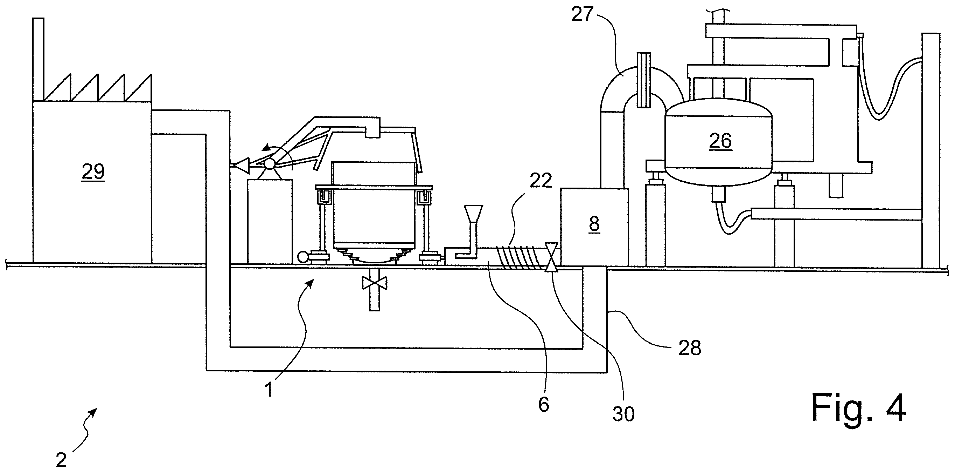

In Figur 1 ist eine Ausführungsvariante der erfindungsgemäßen Vorrichtung 1 zum Trocknen und/oder Vorwärmen von metallischen Materialien, wie beispielsweise Stahlschrott, Aluminiumschrott, Kupferschrott, Elektroschrott in einer schematischen Darstellung gezeigt, die einen Teil einer metallurgischen Anlage 2 zur Herstellung von schmelzflüssigen Erzeugnissen aus den genannten Schrotten bilden kann (siehe Figur 4). Das Einsatzgebiet der vorliegend dargestellten Vorrichtung 1 ist allerdings nicht hierauf beschränkt, sondern kann auch in gleicherweise zum Trocknen und/oder Vorwärmen von Eisenschwamm oder anderen Nichteisenmetallen, wie beispielsweise Kupferhaltigen-Schrotten, oder aber auch nichtmetallischen Materialien, wie beispielsweise Gläsern, etc. verwendet werden. Insofern wird darauf hingewiesen, dass die Erfindung nicht auf die in den unabhängigen Ansprüchen definierten Merkmalskombinationen beschränkt ist, sondern auch durch jede beliebige andere Kombination von bestimmten Merkmalen aller insgesamt offenbarten Einzelmerkmale definiert sein kann.

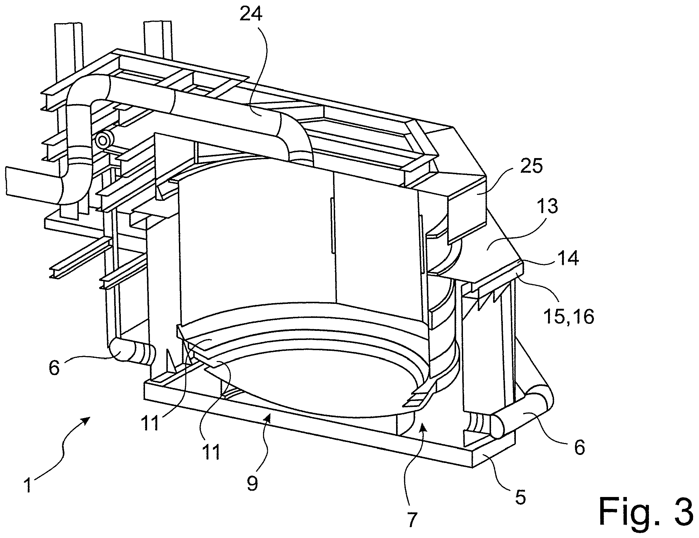

Die Vorrichtung 1 umfasst zunächst ein Aufnahmebehältnis 3, welches vorliegend eine hohlzylindrisch ausgebildete Wandung 4 aufweist, die auf einem Fundament 5 ruht. Im unteren Bereich der Wandung 4 ist eine Prozessgaseingangsleitung 6 angeordnet, die sich durch das Fundament 5 in das Innere des Aufnahmebehältnisses 3 erstreckt und in diesem mündet. Über die Prozessgaseingangsleitung 6 wird dem Aufnahmebehältnis 3 ein Prozessgas mit einer Temperatur im Bereich von 600 bis 1200 °C zugeführt, über welches der in einem Schrottkorb 7 vorhandene Schrott (nicht dargestellt) getrocknet und/oder vorgewärmt werden kann. Um das Prozessgas möglichst homogen in das Aufnahmebehältnis 3 zuführen zu können, kann die Prozessgaseingangsleitung 6 vorzugsweise eine horizontal liegende Ringleitung (nicht dargestellt) umfassen, die mehrere Anschlüsse aufweist, über die das Prozessgas sodann dem Aufnahmebehältnis 3 zugeführt wird. An ihrem zum Aufnahmebehältnis 3 gegenüberliegenden Ende kann die Prozessgaseingangsleitung 6 mit einer Nachverbrennungskammer 8 (siehe Figur 3) oder alternativ einer Einrichtung zur Herstellung eines Prozessgases (nicht dargestellt) verbunden sein. Eine solche Einrichtung kann beispielsweise eine Kammer mit darin angeordneten Brennern umfassen.

Der in dem Aufnahmebehältnis 3 angeordnete Schrottkorb 7 weist einen gasdurchlässigen Bodenbereich 9 auf, der in der vorliegenden Ausführungsvariante gewölbt ausgebildet ist und umfangsseitig mehrere Schlitze 10 umfasst, über die das heiße Prozessgas in den Schrottkorb 7 einbringbar ist. Die umfangsseitigen Schlitze 10 werden durch eine Kaskade von übereinander geschichteten Blechen 11 gebildet, die vertikal in einem spezifischen Abstand zueinander angeordnet sind (siehe Figur 1 und 3) und in Bezug auf eine Horizontale um bis zu 30° geneigt sein können.

Wie der Darstellung in Figur 1 weiterhin zu entnehmen, weist der Schrottkorb 7 an seiner äußeren Mantelfläche 12 im oberen Bereich ein flanschartig ausgebildetes Element 13 mit einem Dichtmittel 14 auf, welches in Form eines ringförmigen Bleches ausgebildet ist, dass sich von der unteren Seite des flanschartigen Elements 13 vertikal erstreckt. Das in Form des ringförmigen Bleches ausgebildete Dichtmittel 14 korrespondiert hierbei mit einem Dichtsitz 15 des Aufnahmebehältnisses 3, welcher in Form eines ringförmigen Kanals 16 ausgebildet ist und beispielsweise mit Sand gefüllt sein kann.

Weiterhin umfasst das Aufnahmebehältnis 3 ein Auflageelement 17, auf dem der Schrottkorb 7 innerhalb des Aufnahmebehältnisses 3 abgestellt werden kann, sowie eine unterhalb des Auflageelements 17 angeordnete Wasserleitung 18, über die das während eines Trocknungsvorgangs anfallende kondensierte Wasser aus dem Schrottkorb 7 ausführbar ist.

Um zum einen die Temperatur des heißen Prozessgases zu regulieren und zum anderen dieses soweit zu verdünnen, dass eine Überschreitung der zulässigen Betriebsparameter der mechanischen und elektrischen Komponenten der Vorrichtung 1 verhindert werden können, umfasst die in der vorliegenden Ausführungsvariante gezeigte Vorrichtung 1 eine in der Prozessgaseingangsleitung 6 koaxial angeordnete, als Unterschalldüse ausgebildete, Injektordüse 19, über die ein Kühlgas in das Prozessgas eingebracht werden kann. Die Injektordüse 19 ist hierbei über eine Kühlgasleitung 20 mit einer Gebläseeinrichtung 21 fluidisch verbunden, über die Luft als Kühlgas dem heißen Prozessgas zugemischt werden kann. Weiterhin umfasst die Prozessgaseingangsleitung 6 einen wassergekühlten Kühlmantel 22, über den die für den Trocknungs- und/oder Vorwärmprozess erforderliche Temperatur des Prozessgases zusätzlich reguliert werden kann.

Das während des Trocknungs- und/oder Vorwärmprozesses den Schrottkorb 7 durchströmende Prozessgas wird in der vorliegenden Ausführungsvariante über eine oberhalb des Schrottkorbs 7 angeordnete Haube 23 abgesaugt, welche fluidisch mit einer Prozessgasausgangsleitung 24, die wiederum eine Gebläseeinrichtung (nicht dargestellt) aufweist, verbunden ist. Erkennbar ist hierbei, dass die Haube 23 über dem Aufnahmebehältnis 3, insbesondere über den Schrottkorb 7 derart positioniert ist, dass die Umgebungsluft mit eingesaugt werden kann.

In Figur 3 ist eine weitere Ausführungsvariante der erfindungsgemäßen Vorrichtung 1 in einer Schnittdarstellung gezeigt, die im Unterschied zu der in Figur 1 gezeigten Ausführungsvariante ein Deckelelement 25 aufweist, über das der Schrottkorb 7 verschlossen werden kann, jedoch derart, dass Umgebungsluft weiterhin eingesaugt werden kann.

Figur 4 zeigt eine Ausführungsvariante der metallurgischen Anlage 2 zur Herstellung von schmelzflüssigen metallischen Erzeugnissen. Die Anlage 2 umfasst ein Einschmelzaggregat 26, beispielsweise einen Elektrolichtbogenofen (EAF), eine mit dem Einschmelzaggregat 26 über eine Prozessabgasleitung 27 fluidisch verbundene Nachverbrennungskammer 8 sowie die Vorrichtung 1, die über die Prozessgaseingangsleitung 6 mit der Nachverbrennungskammer 8 fluidisch verbunden ist. Erkennbar ist weiterhin, dass die Nachverbrennungskammer 8 mit einer Prozessgashauptleitung 28 fluidisch verbunden ist. Über die Prozessgashauptleitung 28 wird der überwiegende Teil des Prozessgases aus der Nachverbrennungskammer 8 einer Aufbereitungsanlage 29 zugeführt. Sofern eine Schrottcharge vorgewärmt und/oder getrocknet werden muss, kann über ein Ventil 30 ein Teilvolumenstrom des Prozessgases aus der Nachverbrennungskammer 8 der Vorrichtung 1 zugeführt werden.

### Bezugszeichen

- 1: Vorrichtung
- 2: Anlage
- 3: Aufnahmebehältnis
- 4: Wandung
- 5: Fundament
- 6: Prozessgaseingangsleitung
- 7: Schrottkorb
- 8: Nachverbrennungskammer
- 9: Bodenbereich
- 10: Schlitze
- 11: Bleche
- 12: äußere Mantelfläche
- 13: Element
- 14: Dichtmittel
- 15: Dichtsitz
- 16: Kanal
- 17: Auflageelement
- 18: Wasserleitung
- 19: Injektordüse
- 20: Kühlgasleitung
- 21: Gebläseeinrichtung
- 22: Kühlmantel
- 23: Haube
- 24: Prozessgasausgangsleitung
- 25: Deckelelement
- 26: Einschmelzaggregat
- 27: Prozessabgasleitung
- 28: Prozessgashauptleitung
- 29: Aufbereitungsanlage
- 30: Ventil

## Patentansprüche

1. Vorrichtung (1) zum Trocknen und/oder Vorwärmen von metallischen und/oder nichtmetallischen Materialien, vorzugsweise Schrotten, umfassend ein Aufnahmebehältnis (3) sowie einen in dem Aufnahmebehältnis (3) angeordneten Schrottkorb (7), der einen gasdurchlässigen Bodenbereich (9) aufweist, wobei das Aufnahmebehältnis (3) in seiner Wandung (4) zumindest eine Prozessgaseingangsleitung (6) umfasst, über die ein Prozessgas mit einer Temperatur im Bereich von 200 bis 1600 °C in das Aufnahmebehältnis (3) einbringbar ist,
**gekennzeichnet durch**
zumindest eine innerhalb der zumindest einen Prozessgaseingangsleitung (6) koaxial angeordnete Injektordüse (19), über die ein Kühlgas in das Prozessgas einbringbar ist.

2. Vorrichtung (1) nach Anspruch 1, wobei die zumindest eine Injektordüse (19) über eine Kühlgasleitung (20) mit einer Kühlgasfördereinrichtung, insbesondere einer Gebläseeinrichtung (21), fluidisch verbunden ist.

3. Vorrichtung (1) nach Anspruch 1 oder 2, wobei die zumindest eine Injektordüse (19) als Unterschalldüse ausgebildet ist.

4. Vorrichtung (1) nach einem der vorhergehenden Ansprüche, wobei die zumindest eine Prozessgaseingangsleitung (6) zumindest einen Kühlabschnitt (22) aufweist.

5. Vorrichtung (1) nach einem der vorhergehenden Ansprüche, wobei die zumindest eine Prozessgaseingangsleitung (6) in einem unteren Bereich der Wandung (5) angeordnet ist.

6. Vorrichtung (1) nach einem der vorhergehenden Ansprüche, wobei der gasdurchlässige Bodenbereich (9) des Schrottkorbs (7) gewölbt ausgebildet ist und umfangsseitig mehrere Schlitze (10) umfasst, über die das Prozessgas in den Schrottkorb (7) einbringbar ist.

7. Vorrichtung (1) nach Anspruch 6, wobei die Schlitze (10) durch eine Anordnung von übereinander geschichteten Blechen (11) gebildet sind.

8. Vorrichtung (1) nach einem der vorhergehenden Ansprüche, wobei der Schrottkorb (7) an seiner äußeren Mantelfläche (12) ein flanschartig ausgebildetes Element (13) mit einem Dichtmittel (14) aufweist, welches mit einem Dichtsitz (15) des Aufnahmebehältnisses (3) korrespondiert, so dass das Aufnahmebehältnis (3) hermetisch verschließbar ist.

9. Vorrichtung (1) nach einem der vorhergehenden Ansprüche, wobei das Aufnahmebehältnis (3) ein Auflageelement (17) aufweist, auf dem der Schrottkorb (7) abstellbar ist.

10. Vorrichtung (1) nach einem der vorhergehenden Ansprüche, wobei das Aufnahmebehältnis (3), vorzugsweise unterhalb des Auflageelements (17), eine Wasserleitung (18) umfasst, über die das während eines Trocknungsvorgangs anfallende kondensierte Wasser aus dem Aufnahmebehältnis (3) ausführbar ist.

11. Vorrichtung (1) nach einem der vorhergehenden Ansprüche, weiter umfassend ein Deckelelement (25) und/oder eine Haube (23).

12. Vorrichtung (1) nach Anspruch 11, wobei das Deckelelement (25) und/oder die Haube (23) eine Prozessgasausgangsleitung (24) umfasst, über die das Prozessgas wieder ausführbar ist.

13. Verfahren zum Trocknen und/oder Vorwärmen von metallischen und/oder nichtmetallischen Materialien, vorzugsweise Schrotten, mittels eines Prozessgases, welches über eine Prozessgaseingangsleitung (6) einer Vorrichtung (1) nach einem der vorhergehenden Ansprüche zugeführt wird,
**dadurch gekennzeichnet, dass**
dem Prozessgas über zumindest eine in der zumindest einen Prozessgaseingangsleitung (6) koaxial angeordnete Injektordüse (19) ein Kühlgas zugemischt wird.

14. Metallurgische Anlage (2), vorzugsweise zur Herstellung von schmelzflüssigen metallischen Erzeugnissen, umfassend ein Einschmelzaggregat (26), vorzugsweise ein elektrisch betriebenes Einschmelzaggregat (26), eine mit dem Einschmelzaggregat (26) über eine Prozessabgasleitung (27) fluidisch verbundene Nachverbrennungskammer (8) sowie eine Vorrichtung (1) nach einem der vorhergehenden Ansprüche 1 bis 12, die über die Prozessgaseingangsleitung (6) mit der Nachverbrennungskammer (8) fluidisch verbunden ist.
